# EUROPÄISCHE PATENTSCHRIFT

(11) **EP 1 103 173 B1**
(45) Veröffentlichungstag und Bekanntmachung des Hinweises auf die Patenterteilung: **08.06.2005**
(21) Anmeldenummer: 00123372.5
(22) Anmeldetag: 31.10.2000
(51) Int. Cl.: A01C 1/06, C09B 67/20

(54) **Verwendung fester Pigmentpräparationen zur Saatgut-/beizeneinfärbung**
Use of solid pigment preparations for colouring seeds and liquid-treated seeds
Utilisation de préparations solides de pigments pour colorer des semences et semences traitées par des liquide

(30) Priorität: 12.11.1999 DE 19954401
(43) Veröffentlichungstag der Anmeldung: 30.05.2001
(73) Patentinhaber: Bayer Chemicals AG, 51368 Leverkusen (DE)
(72) Erfinder: Nyssen, Peter-Roger, 41542 Dormagen (DE)

(56) Entgegenhaltungen:
- EP-A- 0 013 769
- EP-A- 0 751 190
- EP-A- 0 789 987
- WO-A-00/25568
- WO-A-93/14158
- WO-A-95/31889
- WO-A-98/18311
- CA-A- 1 251 653
- FR-A- 2 777 421
- US-A- 4 272 417
- US-A- 5 137 747

## Beschreibung

Die Erfindung betrifft die Verwendung von festen Pigmentpräparationen als Farbmittel zur Einfärbung von Saatgut und Saatgutbeizen.

Die Saatgutbeizung ist eine oft praktizierte Form der Behandlung von Pflanzen mit Pestiziden. Unter Pestiziden werden insbesondere Herbizide, Insektizide, Fungizide, und weitere Pflanzenschutzmittel verstanden.

Heute werden Saatgüter mit Pestiziden in Saatgutbehandlungsanlagen behandelt, in denen im allgemeinen die Pestizide in einer sog. Formulierung mit dem Saatgut gemischt werden. Als Mischverfahren kommen beispielsweise die sog. Pillierung, Granulierung oder Inkrustierung in Frage, wobei entweder vorformulierte Beizmittel auf das Saatgut inform eines Coatings aufgebracht werden oder einzelne Formulierungsbestandteile direkt vor oder im Verlauf des Mischprozesses aufgebracht werden. In den Formulierungen der Beizmittel liegen die aktiven Einsatzstoffe (Pestizide) i.A. als Feststoffe vor, die z.B. in Form ihrer wasserbenetzbaren Pulver oder Granulate, wässriger oder wassermischbarer Suspensionen oder Emulsionen eingesetzt werden.

Die Beizmittelformulierungen können weiterhin noch anorganische oder organische Bindemittel (z.B.wassermischbare filmbildene Polymere, oberflächenaktive Mittel, Biocide, Verdickungsmittel oder Schutzkolloide, Antischaummittel) enthalten. Gewöhnlich enthalten sie jedoch zusätzlich ein Farbmittel, insbesondere ein anorganisches oder organisches Farbpigment. Dies dient der farblichen Kennzeichnung oder Unterscheidung bestimmter Saatgutarten, dem Schutz vor Vogelfraß, sowie auch der verbesserten Stabilität der Formulierungsrezeptur beziehungsweise als Füllstoff. Die Pigmente werden entweder in Form von Pigmentpulvern als auch von flüssigen, i.A. wasser-basierenden Präparationen verwendet.

Die Verwendung von roten, wässrigen Pigmentpräparationen ist in Beispiel 1 u. 2, WO-A-99/29169 beschrieben, von anorganischem Eisenoxid-Pulverpigment in Beispiel 2 von EP-A-13 769.

Die Farbmittel (Pigmente) können sowohl vorformulierten Beizmitteln zugesetzt werden oder sie werden zusammen mit den anderen Komponenten der Formulierung vor oder während dem Mischprozess dem Saatgut zugegeben. Übliche Pulverpigmente besitzen den Nachteil, dass die Pigmentteilchen noch stark aggregiert oder agglomeriert sind, sodass oftmals eine vollständige Benetzung und Dispergierung der Pigmente während des Mischprozesses nicht gelingt. Darüberhinaus ist die hohe Staubbelastung während des Handlings von Nachteil.

Wässrige (vordispergierte) Pigmentpräparationen erlauben zwar im Prinzip eine intensivere Färbung, führen jedoch zu unerwünschter Verdünnung der Beizmittel und sind daher nur in beschränktem Umfang technisch einsetzbar. Sie sind zudem aufwendiger hinsichtlich Verpackung und Transport und müssen für eine ausreichende Lagerstabilität besonders ausgerüstet werden (Konservierung, Eintrocknungsverhinderung, Gefrierschutz etc.). Oft - wie z.B. im Fall von C.I. Pigment Red - zeigen wässrige Präparationen nach dem Stand der Technik eine starke Eindickungsneigung, also mangelnde Lagerstabilität.

Daher besteht der Wunsch nach neuen, leicht dispergierbaren und in allen Verfahren der Beizmittelanwendung verwendbaren hochkonzentrierten Pigmentpräparationen, die die beschriebenen Nachteile überwinden und wirtschaftlich herstellbar sind. Insbesondere besteht Bedarf an Pigmentpräparationen in den Farbtonbereichen Rot, Blau, Grün, Weiß.

Feste Pigmentpräparationen sind in anderen technischen Anwendungsgebieten bereits bekannt, wie z.B. zum Pigmentieren von Baustoffen, Putzen und Dispersionsfarben.

In DE-A-19 523 204 sowie in DE-A-2 608 993 werden pulverförmige Pigmentzubereitungen und Verfahren zu ihrer Herstellung beschrieben, die dadurch gekennzeichnet sind, dass neben Pigment und Dispergiermittel zusätzlich sehr gut wasserlösliche Filmbildner oder Schutzkolloide wie z.B. auf Basis von Polyvinylalkohol/Vinylalkohol-Gemischen, Vinylalkoholcopolymeren oder Polymeren von N-Vinylpyrrolidon eingesetzt werden, um die leichte Dispergierbarkeit der Zubereitungen in den wässrigen Anwendungsmedien zu gewährleisten. Derartige Filmbildner sind jedoch in Formulierungsrezepturen für Saatgutbeizen unerwünscht, da sie - auch bedingt durch die hohe erforderliche Menge - in den Rezepturen verdickend wirken oder andere negative Wechselwirkungen mit Beizmittelkomponenten haben können.

Ein anderer Nachteil von festen und auch flüssigen Pigmentpräparationen, die organische Filmbildner oder Schutzkolloide enthalten, ist, dass sie im Verlauf längerer Mischzeiten in den wässrigen Anwendungsmedien reflokkulieren, Farbstärke verlieren und meist auch den Farbton verändern. Dies trifft ganz besonders auf Präparationen basierend auf Cu-Phthalocyaninpigmente und Pigmente auf Basis verlackter Farbstoffe zu, die auf dem Saatgutbeizengebiet vielfach schon in Form ihrer Pulver verwendet werden. Nach dem Stand der Technik hergestellte flüssige Pigmentpräparationen auf Basis verlackter Farbstoffe wie z.B. Color Index Pigment Red 48:2 besitzen zudem den Nachteil mangelnder Lagerstabilität hinsichtlich Viskosität und Koloristik.

Es besteht daher der Bedarf nach gut redispergierbaren Pigmentpräparationen mit verbesserter Lagerstabilität und hohem Pigmentgehalt ohne die genannten Nachteile von festen Pigmentpräparationen nach dem Stand der Technik.

Die Erfindung betrifft daher die Verwendung von festen Pigmentpräparationen, die ohne Zusatz von organischen Schutzkolloiden oder Filmbildnern erhalten werden können zum Einfärben (Farbpigmentierung) von Saatgut oder Saatgutbeizen beziehungsweise -formulierungen, vorzugsweise wässrigen, enthaltend
a) wenigstens ein organisches oder anorganisches Pigment und
b) wenigstens eine Verbindung aus der Gruppe der Polyetherpolyole oder der Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren, oder der oxalkylierten Phenole, insbesondere Phenol/Styrol-Polyglykolether,
dadurch gekennzeichnet, dass die festen Pigmentpräparationen bezogen auf die Pigmentpräparation einen Wassergehalt von weniger als 10, vorzugsweise weniger als 3 Gew.% und eine mittlere Partikelgröße (Gewichtsmittel) von 20 bis 2000, vorzugsweise 50 bis 1000 und insbesondere 80 bis 500 µm besitzen und keine organischen Schutzkolloide oder Filmbildner enthalten. Vorzugsweise werden die festen Pigmentpräparationen durch Verfahren der Sprühtrocknung in Form von gut rieselfähigen, staubarmen Granulaten gewonnen.

Die organischen oder anorganischen Pigmente der Komp.a) unterliegen keinen Einschränkungen.

Als Pigmente kommen beispielsweise die nach dem Stand der Technik bekannten infrage wie z.B. zu entnehmen aus: Lückert, Pigment+Füllstoff Tabellen, 5. Auflage, Laatzen, 1994. Hiebei handelt es sich um in wässrigen Medien unlösliche Stoffe.

Als anorganische Pigmente kommen beispielsweise Weiß- und Buntpigmente in Frage.

Als anorganische Weißpigmente sind insbesondere zu nennen Oxide, wie z.B. Titandioxid, Zinkoxid, (ZnO, Zinkweiß), Zirkonoxid, Carbonate wie z.B. Bleiweiß, Sulfate wie z.B. Bleisulfat, und Sulfide wie z.B. Zinksulfid, und Lithopone; besonders bevorzugt ist Titandioxid.

Als anorganische Buntpigmente sind zu nennen Pigmente aus der Gruppe der Oxide und Hydroxide in Form ihrer anorganischen Einzelverbindungen oder Mischphasen, insbesondere Eisenoxidpigmente, Chromoxidpigmente und oxidische Mischphasenpigmente mit Rutil- oder Spinellstruktur, sowie Bismutvanadat-, Cadmium-, Cersulfid-, Chromat-, Ultramarin- und Eisenblaupigmente.

Beispiele von Eisenoxidpigmenten sind Pigmente vom Color Index Pigment Yellow 42, Pigment Red 101, Pigment Blue 11, Pigment Brown 6 sowie transparente Eisenoxidpigmente.

Beispiele von Chromoxidpigmenten sind solche vom Color Index Pigment Green 17 und Pigment Green 18.

Beispiele oxidischer Mischphasenpigmente sind Nickeltitan- und Chromtitangelb, Cobaltgrün und -blau, Zinkeisen- und Chromeisenbraun sowie Eisenmangan- und Spinellschwarz. Bevorzugt sind Eisenoxidpigmente, insbesondere rote.

Bevorzugt sind auch Ruße, die im Rahmen dieser Anmeldung als Pigmente verstanden werden und von denen eine große Zahl beispielsweise aus Colour Index, 2. Auflage, bekannt sind. Insbesondere zu nennen sind saure bis alkalische Ruße nach dem Fumacerußverfahren sowie chemisch oberflächenmodifizierte Ruße, beispielsweise sulfo- oder carboxylgruppenhaltige Ruße.

Bevorzugte organische Pigmente sind z.B. solche der Monoazo-, Disazo-, verlackte Azo-, β-Naphthol-, Napthol AS-, Benzimidazolon-, Disazokondensations-, Azometallkomplex-, Isoindolin- und Isoindolinon-Reihe, ferner polycyclische Pigmente wie z.B. aus der Phthalocyanin-, Chinacridon-, Perylen-, Perinon-, Thioindigo-, Anthrachinon-, Dioxazin-, Chinophthalon- und Diketopyrrolopyrrol-Reihe. Außerdem verlackte Farbstoffe wie Ca-, Mg- und Al-Lacke von sulfonsäure- oder carbonsäuregruppenhaltigen Farbstoffen.

Besonders bevorzugte organische Pigmente sind polycyclische Pigmente aus der Gruppe der gegebenenfalls halogenierten Cu-Phthalocyaninpigmente wie z.B. solche vom Color Index Pigment Blue 15, 15:1 und 15:3, Pigment Green 7 und Pigment Green 36, sowie der Anthrachinonpigmente, insbesondere aus der Reihe der heterocyclischen und polycarbocyclischen Anthrachinonpigmente.

Weiterhin bevorzugt sind Metallsalze von sulfon- u/o carbonsäuregruppenhaltigen Monoazopigmente wie β-Naphthol-, Naphthol-AS- und Naphthalinsulfonsäurepigmente bspw. 2-Hydroxy-3-Naphthalinsulfonsäure, die auch unter die Bezeichnung "verlackte Azopigmente" fallen.

Anorganische Füllstoffe werden im Rahmen dieser Anmeldung ebenfalls als Pigmente verstanden.

Als anorganische Füllstoffe sind z.B. Calciumcarbonat, Talkum, Glimmer sowie Bariumsulfat zu nennen.

Als Verbindungen aus der Gruppe Polyetherpolyole kommen vorzugsweise Homo-, Co- oder Block-Co-Polymerisate von Ethylenoxid- und/oder Propylenoxid in Frage, die vorzugsweise durch Umsetzung von Ethylenoxid und/oder Propylenoxid mit Wasser oder mit niedermolekularen Alkoholen, die mindestens zwei Hydroxygruppen besitzen wie beispielsweise Ethylenglykol, Propylenglykol, 1,2- oder 1,3-Propandiol, 1,2- oder 1,4-Butandiol, Hexandiol, Glycerin oder Pentaerythrit oder mit niedermolekularen Aminen, die mindestens zwei Aminogruppen mit reaktionsfähigen Wasserstoffatomen tragen, wie Ethylendiamin, hergestellt werden. Bevorzugte Polyetherpolyole sind Polyalkylenglykole, die ein als Zahlenmittel bestimmtes mittleres Molekulargewicht von 200 bis 11000, insbesondere 250 bis 4000, besonders bevorzugt 250 bis 1000 g/mol besitzen. Ganz besonders bevorzugt sind Polyethylen- und/oder Polypropylenglykole einschließlich Tripropylenglykol.

Weitere bevorzugte Polyetherpolyole sind Block-Co-Polymere, die durch kontrollierte, sequentielle Polyaddition von Ethylenoxid und/oder Propylenoxid auf bifunktionellen Alkoholen oder Aminen erhalten werden, insbesondere wasserlösliche oder wassermischbare Block-Co-Polymere der genannten Art wie unter dem Namen Pluronic® beziehungsweise Tetronic® bekannt.

Als Verbindungen aus der Gruppe der Umsetzungsprodukte von Alkylenoxiden mit alkylierbaren Verbindungen kommen insbesondere oberflächenaktive Mittel auf Basis von Fettalkoholen, Fettaminen, Fettsäuren, Phenolen, Alkylphenolen, Carbonsäureamiden und Harzsäuren in Frage. Insbesondere handelt es sich hierbei z.B. um Ethylenoxidaddukte aus der Klasse der Umsetzungsprodukte von Ethylenoxid mit
m) gesättigten und/oder ungesättigten Fettalkoholen mit 6 bis 25 C-Atomen oder
n) Alkylphenolen mit 4 bis 12 C-Atomen im Alkylrest oder
o) gesättigten und/oder ungesättigten Fettaminen mit 14 bis 20 C-Atomen oder
p) gesättigten und/oder ungesättigten Fettsäuren mit 14 bis 22 C-Atomen oder
q) hydrierten und/oder unhydrierten Harzsäuren,
r) aus natürlichen oder modifizierten, gegebenenfalls hydrierten Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind.

Bevorzugt werden als Komp. b) Verbindungen aus den Klassen m), o) und p), insbesondere Ethylenoxidaddukte von gegebenenfalls hydrierten Rizinusöl mit 10 bis 100, vorzugsweise 15 bis 80 Mol-Einheiten Ethylenoxid.

Verbindungen aus der Gruppe der oxalkylierten Phenole, insbesondere in Form von gegebenenfalls ionisch-modifizierten Phenol/Styrol-Polyglykolethem, sind aus DE-A-19 644 077 bekannt.

Als Phenol/Styrol-Polyglykolether sind solche der Formel (X) bevorzugt 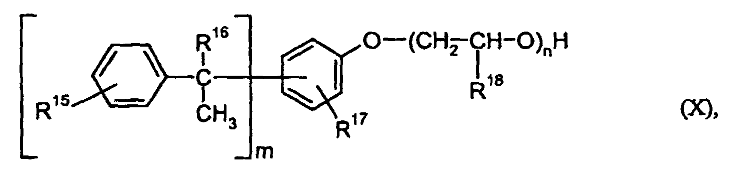 in der
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Als ionisch modifizierte Phenol/Styrol-Polyglykolether (X) sind solche der Formel (XI) bevorzugt 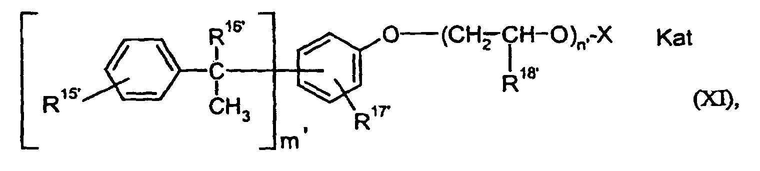 in der
- R^{15'}, R^{16'}, R^{17'}, R^{18'}, m' und n': den Bedeutungsumfang von R¹⁵, R¹⁶, R¹⁷, R¹⁸, m beziehungsweise n, jedoch unabhängig hiervon, annehmen,
- X: die Gruppe -SO₃^{⊖}, -SO₂^{⊖}, -PO₃^{⊖⊖} oder -CO-(R¹⁹)-COO^{⊖} bedeutet,
- Kat: ein Kation aus der Gruppe von H^{⊕}, Li^{⊕}, Na^{⊕}, K^{⊕}, NH₄^{⊕} oder -HO-CH₂CH₂-NH₄^{⊕} ist, wobei im Falle von X = -PO₃^{⊖⊖} zwei Kat vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Als weitere Zuschlagstoffe können die erfindungsgemäß verwendeten Pigmentpräparationen die für Pigmentpräparationen üblichen Mittel enthalten wie Konservierungsmittel, UV-Schutzmittel, pH-Regelungsmittel, Enthärtungsmittel sowie andere oberflächenaktive Mittel wie z.B. Netzmittel oder Antischaummittel.

Als Entschäumer und Schaunlverhinderungsmittel kommen insbesondere Produkte auf Basis natürlicher Öle oder Mineralöle, gegebenenfalls chemisch modifizierte Alkohole und chemisch modifizierte Silikone in Frage.

Als Wasserenthärtungsmittel kommen beispielsweise mittel- bis hochmolekulare Polyphosphate z.B. Calgon® in Frage.

In einer besonderen Ausführungsform enthalten die erfindungsgemäß verwendeten Pigmentpräparationen als zusätzliche Komp. c) gegebenenfalls hydrophobierte hochdisperse, amorphe pyrogene Kieselsäuren, feinstteiliges, gegebenenfalls hydrophobiertes Kaolin oder hochdisperses Aluminiumoxid; insbesondere besitzt die Komp.c) eine spezifische Oberfläche [B.E.T.-Methode] von 2 bis 500, vorzugsweise 10 bis 370 m²/g.

Weiterhin können die Pigmentpräparationen noch spezielle Verdickungsmittel enthalten.

Als geeignete Verdickungsmittel sind solche aus der Gruppe der anionischen oder nichtionischen organischen wasserlöslichen Polymere zu nennen, die im weiteren Sinne auch als Schutzkolloide für die feste Pigmentpräparation verstanden werden können. Besonders bevorzugt sind organische Verdickungsmittel, die vorzugsweise eine Löslichkeit in Wasser von >100 g/l besitzen.

Vorzugsweise wird als organisches Verdickungsmittel eine Verbindung eingesetzt, deren 4 gew.-%ige wässrige Lösung bei 20°C eine Viskosität von >2 mPa.s aufweist.

Bevorzugte organische Verdickungsmittel sind Verbindungen, ausgewählt aus nachfolgenden Gruppen:
- Dextrine oder Cyclodextrine,
- Stärke und Stärkederivate, insbesondere abgebaute oder teilabgebaute Stärke,
- anionische Polyhydroxyverbindungen, insbesondere Xanthan oder Carboxymethylcellulose
- Cellulosederivate wie z.B. Methylcellulose, insbesondere Hydroxymethyl-, Hydroxyethyl- oder Hydroxypropylcellulose,
- partiell hydrolysierte Polymerisate von Vinylacetat, vorzugsweise Polyvinylalkohol, die zu mehr als 70 % hydrolysiert sind und/oder Vinylalkohol-Copolymerisate, vorzugsweise Copolymere aus Vinylacetat und Alkylvinylester, die partiell oder vollständig verseift sind, sowie Polyvinylalkohol selbst,
- Polymerisate von N-Vinylpyrrolidon, oder Copolymerisate mit Vinylestern.

Bevorzugt kommen als Verdickungsmittel Stärke, derivatisierte Stärke und insbesondere abgebaute Stärke in Frage.

Abgebaute Stärke wird beispielsweise erhalten, indem man z.B. native Kartoffel-, Weizen, Mais-, Reis- oder Tapiokastärke einem oxidativen, thermischen, enzymatischen oder hydrolytischen Abbau unterwirft. Bevorzugt sind hierbei oxidativ abgebaute Stärken, besonders bevorzugt ist mit Hypochlorit oxidativ abgebaute Kartoffelstärke.

Weiterhin kommen insbesondere Dextrine und Cyclodextrine in Frage. Als Dextrine werden vorzugsweise Weißdextrine, Gelbdextrine sowie Maltodextrine mit einer Kaltwasserlöslichkeit von größer 50 Gew.-%, vorzugsweise größer 90 %, gemessen bei 10 g auf 200 ml Wasser bei 20°C, verwendet.

Bevorzugte Cyclodextrine sind solche vom Typ α-CD mit 6 Glucopyranose-Einheiten, β-CD mit 7 Glucopyranose-Einheiten und γ-CD mit 8 Glucopyranose-Einheiten sowie verzweigte AB, AC, AD-Diclosyl-CD und Mischungen der genannten Dextrine.

Als bevorzugte anionische Polyhydroxyverbindungen kommen Polysaccharide, insbesondere Xanthan sowie Carboxymethylcellulose in Frage.

Als Cellulosederivate können als Verdickungsmittel bevorzugt Methylcellulose, Hydroxymethylcellulose, Hydroxyethyl- und -propylcellulose eingesetzt werden.

Insbesondere kommen als Verdickungsmittel wenigstens partiell hydrolysierte (verseifte) Polymerisate und Copolymerisate von Vinylacetat, welche in Wasser vollständig dispergierbar, vorzugsweise vollständig löslich sind, in Frage. Bevorzugt sind hydrolysierte Polymerisate und Copolymerisate von Vinylacetat mit einem Hydrolysegrad von 70 bis 97 %, vorzugsweise von 80 bis 92 %, einem Molekulargewicht (Mw) von 1 000 bis 150 000, vorzugsweise 2000 bis 100 000 g/mol oder einer Auslaufviskosität (bestimmt nach DIN 53 015) einer 4 gew.-%igen wässrigen Lösung bei 20°C) von 2 bis 35 mPa.s, vorzugsweise 2 bis 10 mPa.s. Auslaufviskosität = "Höppler"-Viskosität gemessen mit Kugelfallviskosimeter nach DIN 53 015 als 4 gew.-%ige Lösung bei 20°C.

Besonders bevorzugt sind partiell hydrolysierte Polyvinylalkohole sowie Polyvinyalkohol selbst.

Unter Copolymerisaten von Vinylacetat werden als Verdickungsmittel insbesondere voll- oder teilverseifte Vinylalkohol-Copolymerisate verstanden, insbesondere vollverseifte Copolymere aus Alkylvinylester und Vinylacetat mit einem Anteil an Alkylvinylester von vorzugsweise 5 bis 20 Mol-%, ganz besonders Copolymere aus Alkylvinylacetat und Vinylacetat.

Weiterhin kommen als Verdickungsmittel Homo- und Copolymerisate von N-Vinylpyrrolidon in Frage, die in Wasser vollständig dispergieren.

Vorteilhafte Verdickungsmittel sind Polymerisate, welche 35 bis 100 Mol-% Anteile von wiederkehrenden Einheiten der allgemeinen Formel 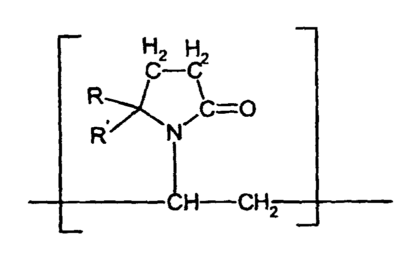 mit R, R' = unabhängig voneinander H, Methyl oder Ethyl und 0 bis 65 Mol-% Anteil eines oder mehrerer monoethylenisch ungesättigter Comonomeren, insbesondere Vinylester wie Vinylacetat, Acrylsäureester wie Ethylacrylat, Methacrylsäureester wie Methylmethacrylat, Vinylalkylester wie Vinylcyclohexylether, Vinylhalogenide wie Vinylchlorid, Vinylcaprolactam, Vinylimidazol, Allylalkohol, Acrylnitril, Styrol, Vinylcarbazol und weitere mehr enthalten. Gegebenenfalls können die Co-Polymere ionisch modifiziert sein (kationisch oder anionisch).

Das Molekulargewicht (M_{w}) der Homo- und Copolymerisate von N-Vinylpyrrolidon beträgt 2 000 bis 1 200 000, vorzugsweise 10 000 bis 150 000 g/mol.

Ganz besonders bevorzugt sind Homopolymerisate von N-Vinylpyrrolidon sowie Copolymerisate mit Vinylestern und Na-Methacrylat.

Die erfindungsgemäß bevorzugt zu verwendenden festen Pigmentpräparationen enthalten bezogen auf Präparationen
a) 30 bis 99 Gew.%, vorzugsweise 60 bis 95 Gew.% der Komp.a) und
b) 1 bis 100 Gew.%, vorzugsweise 5 bis 60 Gew.% der Komp. b) bez. auf das Pigment der Komp. a),
wobei die festen Pigmentpräparationen einen Wassergehalt von weniger als 10, vorzugsweise weniger als 3 Gew.% und eine mittlere Partikelgröße (ex Massenverteilung) von 20 bis 2000, vorzugsweise 50 bis 1000 und insbesondere 80 bis 500 µm besitzen.

Die erfindungsgemäß zu verwendenden festen Pigmentpräparationen können beispielsweise so hergestellt werde, dass man die anorganischen oder organischen Pigmente oder Füllstoffe der Komp.a) in fester Form vorzugsweise als gefinishte oder ungefinishte Pulver, Granulate oder als wasserfeuchte Presskuchen in einem wässrigen oder wässrig-organischen Medium zusammen mit mindestens einem Teil der Komp.b) und gegebenenfalls der Komp. c) sowie gegebenenfalls weiteren Additiven nasszerkleinert und anschließend trocknet.

Bevorzugt wird dabei ein wässriges Medium verwendet, das einen pH-Wert von 2 bis 12, insbesondere von 2 bis 10 aufweist. Im allgemeinen wird eine Temperatur von 0 bis 95°C, vorzugsweise von 20 bis 60°C zur kontinuierlichen oder diskontinuierlichen Nasszerkleinerung angelegt. Unter Nasszerkleinerung wird in dem Zusammenhang Homogenisieren, Mahlen sowie auch Kneten verstanden. Dieser Verfahrensschritt überführt Pigmente u/o Füllstoffe in einen fein verteilten Zustand. Die erforderlichen Additive können gegebenenfalls vor, während oder nach der Erstellung der Feinverteilung zugesetzt werden. Die Auswahl der Verfahren zur Erzielung der gewünschten Feinverteilung vor der Trocknung richtet sich nach dem Aggregations- beziehungsweise Agglomerationszustand der eingesetzten Feststoffe und dem erforderlichen Energieaufwand für die Erzielung der gewünschten Feinverteilung. Beispielsweise kommen für organische und anorganische Füllstoffe sowie anorganische Pigmente Verfahren wie Dissolver, Ultraturrax oder Rotor-Stator-Mühlen in Frage. Herstellungsbedingt stärker aggregierte Pigmente wie z.B. feinteilige organische Pigmente, Ruß und spezielle feinteilige anorganische Oxidpigmente können darüber hinaus Nassmahltechniken mit höherem spezifischen Energieeintrag erforderlich machen. Dieser wird beispielsweise durch Rührwerkskugeln- und perlmühlen, Dispersionskneter, Walzenstuhl oder Hochdruckhomogenisatoren bereitgestellt. Die so erhaltenen wässrigen Pigmentsuspensionen werden gegebenenfalls anschließend mit weiterem Wasser oder wasser-organischem Medium oder gegebenenfalls weiteren genannten Additiven auf eine für die anschließende Trocknung gewünschte Zusammensetzung und Konsistenz eingestellt.

Im Anschluss daran wird vorzugsweise die wässrige Suspension mittels Trocknung in die feste Pigmentpräparation überführt. Als geeignetes Verfahren für die Trocknung ist insbesondere die Sprühtrocknung, vorzugsweise Eiristoffsprühtrocknung mittels Hochdruckbeziehungsweise Drallkammerdüsen oder Sprühtrocknung mittels Zerstäubungsscheiben, Gefriertrocknung mit vor- oder nachgeschalteter Granulation oder Trockenaufarbeitung, Aufbaugranulation beispielsweise nach dem Teller- oder Trommelgranulationsverfahren gegebenenfalls mit teilweise vorgetrocknetem Produkt, Wirbelschichttrocknung und -granulation, Mischeragglomeration und -trocknung gegebenenfalls in Kombination mit Wirbelschicht- beziehungsweise Fließbetttrocknung. Ferner kommen Verfahren wie Mischagglomeration in Suspension mit gegebenenfalls nachgeschalteter Wirbelschicht- oder Fließbetttrocknung, Granulation mittels Pastenverformung und nachgeschalteter Nachtrocknung und Zerkleinerung oder Pelletierung sowie Dampfstrahlagglomeration in Frage. Kombinationen der genannten Verfahren sind ebenfalls möglich.

Besonders bevorzugt sind die Verfahren der Sprühtrocknung mittels Hochdruckbeziehungsweise Drallkammerdüsen, die Sprühtrocknung mit integrierter oder nachgeschaltete Wirbelschicht-Agglomeration und/oder -Trocknung, die Aufbaugranulation nach dem Tellerverfahren sowie die Wirbelschichtgranulation und -trocknung.

Insbesondere weisen die nach diesen Verfahren hergestellten festen Pigmentpräparationen einen Wassergehalt von weniger als 10, vorzugsweise weniger als 3 Gew.% und eine mittlere Partikelgröße von 20 bis 2000, vorzugsweise 50 bis 1000 und insbesondere 80 bis 500 µm auf. Die festen Pigmentpräparationen basieren insbesondere auf einer kugelförmigen oder kugelformähnlichen Partikelstruktur.

Die oben beschriebenen festen Pigmentpräparationen eignen sich aufgrund ihrer Zusammensetzung und guten Redispergierbarkeit in besonderer Weise zur Einfärbung von Saatgut und von wasser-basierenden Saatgutbeizmitteln und ergeben eine höchstmögliche Farb- beziehungsweise Pigment-Ausbeute. Aufgrund der hohen Reinpigmentgehalte von vorzugsweise über 60 Gew.-% können - im Gegensatz zu Pigmentierungen mit wässrigen flüssigen Präparationen niedrigerer Pigmentkonzentration - höhere Farbtiefen ohne unerwünschte Verdünnung der Beizmittel durch eingebrachtes Wasser erreicht werden. Im Gegensatz zu ebenfalls in der Praxis eingesetzten Pigmentpulvern sind die erfindungsgemäß zu verwendenden festen Pigmentpräparationen staubfrei, hervorragend rieselfähig, gut dosierbar und bezogen auf den Reinpigmentgehalt deutlich farbstärker.

Die Verwendung der festen Pigmentpräparationen zum Einfärben von Saatgut beziehungsweise Saatgutbeizen kann in jeder beliebigen Weise erfolgen, beispielsweise dadurch, dass man die feste Pigmentpräparation, gegebenenfalls zusammen oder nacheinander mit Pestiziden und gegebenenfalls weiteren Zusätzen, mit Wasser vermengt und die so entstehenden Schlämmbeizen in geeigneten Apparaten mit dem Saatgut verrührt.

Als geeignete Pestizide sind bspw. die in WO-A-95 31 889, Seite 3, Zeile 13 bis Seite 6, Zeile 13 genannten Verbindungen zu nennen, die auch Bestandteil dieser Anmeldung sein sollen.

### Beispiele:

### Beispiel 1: Feste Pigmentpräparation auf Basis Pigment vom Color Index Pigment White 6

In einem Dissolver wurden

| | |
|---|---|
| 25,4 Teile | vollentsalztes Wasser vorgelegt und bei niedriger Drehzahl |
| | |
| 6 Teile | eines Umsetzungsproduktes von hydriertem Rizinusöl mit 60 Moleinheiten Ethylenoxid (Komp. b), |
| | |
| 0,5 Teile | Triethanolamin (pH Regler), |
| | |
| 0,1 Teile | Surfynol® DF62 (auf Silikonöl basierendes Entschäumungsmittel der Fa. Air Products) sowie |
| | |
| 68 Teile | Kronos® 1001 (Pigment der Komp.a),Color Index Pigment White 6, Titandioxid-Pigment Typ Anatas,Fa. Kronos) vollständig eingemischt und anschließend bei einer Umfangsgeschwindigkeit von 22 m/s über einen Zeitraum von 20 min die Suspension homogenisiert. |

Nach Einstellung mit weiterem Wasser auf einen Feststoffgehalt von 45 Gew.% wurde die Suspension auf einem sog. Einstoffdüsentrockner zum Granulat getrocknet unter folgenden Bedingungen:

| | |
|---|---|
| Düse | Drallkammerdüse mit 1,4 mm Düsendurchmesser |
| | |
| Düsendruck | 26 bar |
| | |
| Düsendurchsatz | 157 kg/h |
| | |
| Lufteintrittstemperatur | 220 °C |
| | |
| Luftaustrittstemperatur | 82 °C |

Man erhielt ein staubfreies und sehr gut rieselfähiges Granulat mit einer mittleren Partikelgröße (ex Massenverteilung) von ca. 160 µm und folgender Zusammensetzung (ca.):

| | |
|---|---|
| 90 % | Pigment White 6 (Pigment der Komp.a) |
| | |
| 8% | Verbindung der Komp.b |
| | |
| 0,6 % | Triethanolamin |
| | |
| 0,1 % | Surfynol® DF62 |
| | |
| 1.3 % | Restfeuchte (Wasser) |

Diese weiße feste Pigmentpräparation war sehr gut redispergierbar in wasser-basierenden Beizmitteln bekannter Pestizide und zeigte hervorragend deckend weiße Pigmentierungen der Beizmittel.

Das Saatgut von Zuckerrüben wurde mit einem Beizmittel enthaltend

| | |
|---|---|
| 50% | Wasser |
| | |
| 7,5 % | einer üblichen Insektizid-Fungizidmischung |
| | |
| 35 % | üblicher mineralischer Zuschlagstoffe und |
| | |
| 7,5 % | der obigen Pigmentpräparation in einem rotierenden Behälter nach bekannten Verfahren inkrustiert und getrocknet. Es wurde eine weiße Pigmentierung mit ausgezeichneter Haftung am Saatgut erhalten. |

### Beispiel 2: Feste Pigmentpräparation auf Basis Pigment vom Color Index Pigment Red 101

In einem Dissolver wurden

| | |
|---|---|
| 40,6 Teile | vollentsalztes Wasser vorgelegt und bei niedriger Drehzahl |
| | |
| 4,2 Teile | eines Umsetzungsproduktes von hydriertem Rizinusöl mit 40 Moleinheiten Ethylenoxid (Komp. b), |
| | |
| 0,2 Teile | Surfynol® DF62 (auf Silikonöl basierendes Entschäumungsmittel der Fa. Air Products) sowie |
| | |
| 55 Teile | Bayferrox® Rot 130M (Pigment der Komp.a), Color Index Pigment Red 101, Bayer AG) vollständig eingemischt, mittels verdünnter Natronlauge der pH Wert auf 8 eingestellt und die Suspension anschließend bei einer Umfangsgeschwindigkeit von 18 m/s über einen Zeitraum von 30 min homogenisiert. |

Nach Einstellung mit weiterem Wasser auf einen Feststoffgehalt von ca. 40 Gew.% wurde die Suspension auf einem sog. Einstoffdüsentrockner zum Granulat getrocknet unter folgenden Bedingungen:

| | |
|---|---|
| Düse | Drallkammerdüse mit 1,09 mm Düsendurchmesser Düsendruck: |
| | |
| Düsendruck | 29 bar |
| | |
| Düsendurchsatz | 107 kg/h |
| | |
| Lufteintrittstemperatur | 180 °C |
| | |
| Lutaustrittstemperatur | 79 °C |

Man erhielt ein staubfreies und sehr gut rieselfähiges Granulat mit einer mittleren Partikelgröße (ex Massenverteilung) von ca. 180 µm und folgender Zusammensetzung (ca.):

| | |
|---|---|
| 91% | Pigment Red 101 (Pigment der Komp.a) |
| | |
| 6,9 % | Verbindung der Komp.b) |
| | |
| 0,2 % | Surfynol® DF62 |
| | |
| 1,9 % | Restfeuchte (Wasser) |

Diese rote feste Pigmentpräparation war sehr gut redispergierbar in wasser-basierenden Beizmitteln und zeigte hervorragende Verträglichkeit in diversen Beizmitteln.

Wie in Beispiel 1 beschrieben, wurde Saatgut von Zuckerrüben mit einem Beizmittel enthaltend

| | |
|---|---|
| 59 % | Wasser |
| | |
| 4% | einer üblichen Insektizid-Fungizid-Mischung |
| | |
| 35 % | übliche mineralische Zuschlagsstoffe |
| | |
| 2% | der obigen festen Pigmentpräparation behandelt und ergab eine gleichmäßig rote Pigmentierung mit guter Haftung am Saatgut. |

### Beispiel 3: Feste Pigmentpräparation auf Basis Pigment vom Color Index Pigment Red 48:2

In einem Schnellrührer wurden

| | |
|---|---|
| 15 | Teile vollentsalztes Wasser vorgelegt und bei niedriger Drehzahl |
| | |
| 2,9 | Teile eines Umsetzungsproduktes von hydriertem Rizinusöl mit 30 Moleinheiten Ethylenoxid (Komp. b ,Emulgator® KS, Bayer AG), |
| | |
| sowie | |
| | |
| 9 | Teile Solfort® Red 2B (Pigment der Komp.a), Color Index Pigment Red 48:2, Bayer AG) vollständig eingetragen, mittels verdünnter Schwefelsäure der pH Wert auf 7,2 eingestellt und die Suspension vollständig homogenisiert. |

Anschließend erfolgte eine Mahlung in 3 Passagen auf einer geschlossenen horizontalen Perlmühle Molinex® Typ LME der Fa. Netzsch mit 0,4-0,6 mm Glasperlen, Mahlraumfüllgrad 70%, Umfangsgeschwindigkeit des Scheibenrührwerks 12 m/s, und dem 2,5-fachen Mahlgutdurchsatz (1/h) im Verhältnis zum Mahlraumvolumen (l). Nach Einstellung mit weiterem Wasser auf einen Feststoffgehalt von ca. 30 Gew.% wurde die Suspension auf einem sog. Einstoffdüsentrockner zum Granulat getrocknet unter folgenden Bedingungen:

| | |
|---|---|
| Düse | Drallkammerdüse mit 1,09 mm Düsendurchmesser |
| | |
| Düsendruck | 28 bar |
| | |
| Düsendurchsatz | 87 kg/h |
| | |
| Lufteintrittstemperatur | 160 °C |
| | |
| Lutaustrittstemperatur | 70 °C |

Man erhielt ein staubfreies und sehr gut rieselfähiges Granulat mit einer mittleren Partikelgröße (ex Massenverteilung) von ca. 210 µm und folgender Zusammensetzung (ca.):

| | |
|---|---|
| 73,8 % | C.I. Pigment Red 48:2 (Pigment der Komp.a) |
| | |
| 23,6 % | Verbindung der Komp.b) |
| | |
| 2,6 % | Restfeuchte (Wasser) |

Diese rote feste Pigmentpräparation war sehr gut redispergierbar in wasser-basierenden Beizmitteln und zeigte hervorragende Verträglichkeit in diversen Beizmitteln.

Nach dem gleichen Verfahren wie in WO-A-95 31889, Bsp. 8 beschrieben, jedoch unter Austausch von 1 Teil C.I. Pigment Red 57:1 gegen 0,5 Teil der obigen festen Pigmentpräparation, wurde eine Gelbeize hergestellt und in einer Beiztrommel nach üblichen Verfahren auf Weizensaatgut aufgebracht. Sowohl die Gelbeize selbst als auch die Belegung der Oberfläche des Saatgut zeigten eine farbstarke und gleichmäßige, insbesondere schlierenfreie Einfärbung. Wurde unter sonst gleichen Bedingungen anstelle der festen Pigmentpräparation ein Pulverpigment vom C.I. Pigment Rot 48:2 (Sofort® Red 2B) eingesetzt, so erhielt man eine merklich farbschwächere und Schlieren aufweisende Einfärbung des Gels.

### Beispiel 4: Feste Pigmentpräparation auf Basis Pigment vom Color Index Pigment Blue 15:1

In einem Schnellrührer wurden

| | |
|---|---|
| 54 | Teile vollentsalztes Wasser vorgelegt und bei niedriger Drehzahl |
| | |
| 21 | Teile eines Umsetzungsproduktes von hydriertem Rizinusöl mit 30 Moleinheiten Ethylenoxid (Komp. b ,Emulgator®KS, Bayer AG), |
| | |
| 0,7 | Teile Aerosil®200 (pyrogene Kieselsäure der Komp.c), Degussa-Hüls AG) |
| | |
| sowie | |
| | |
| 68 | Teile Heliogenblau® L 6905 F (Pigment der Komp.a), Color Index Pigment Blue 15:1, BASF AG) vollständig eingetragen, mittels verdünnter Natronlauge der pH Wert auf 7,3 eingestellt und die Suspension vollständig homogenisiert. |

Anschließend erfolgte eine Mahlung in 2 Passagen auf einer geschlossenen horizontalen Perlmühle Molinex® Typ LME der Fa. Netzsch mit 0,4-0,6 mm Glasperlen, Mahlraumfüllgrad 70%, Umfangsgeschwindigkeit des Scheibenrührwerks 12 m/s, und dem 3-fachen Mahlgutdurchsatz (l/h) im Verhältnis zum Mahlraumvolumen (l). Nach Einstellung mit weiterem Wasser auf einen Feststoffgehalt von ca. 34 Gew.% wurde die Suspension auf einem sog. Einstofftrockner zum Granulat getrocknet unter folgenden Bedingungen:

| | |
|---|---|
| Düse | Drallkammerdüse mit 1,09 mm Düsendurchmesser |
| | |
| Düsendruck | 28 bar |
| | |
| Düsendurchsatz | 95 kg/h |
| | |
| Lufteintrittstemperatur | 180 °C |
| | |
| Lutaustrittstemperatur | 75 °C |

Man erhielt ein staubfreies und sehr gut rieselfähiges Granulat mit einer mittleren Partikelgröße (ex Massenverteilung) von ca. 180 µm und folgender Zusammensetzung (ca.):

| | |
|---|---|
| 75,1 % | C.I. Pigment Blue 15:1 (Pigment der Komp.a) |
| | |
| 23,1 % | Verbindung der Komp.b) |
| | |
| 0,8 % | pyrogene Kieselsäure (Komp.c) |
| | |
| 1,0 % | Restfeuchte (Wasser) |

Diese blaue feste Pigmentpräparation war sehr gut redispergierbar in wasser-basierenden Beizmitteln und zeigte hervorragende Verträglichkeit in diversen Beizmitteln.

## Patentansprüche

1. Verwendung von festen Pigmentpräparationen als Farbmittel zur Einfärbung von Saatgut oder Saatgutbeizen, enthaltend
a) wenigstens ein organisches oder anorganisches Pigment,
b) wenigstens eine Verbindung aus der Gruppe der Polyetherpolyole, der Umsetzungsprodukte von Alkylenoxiden mit alkylierbaren Verbindungen, oder der oxalkylierten Phenole ,insbesondere Phenol/Styrol-Polyglykolether,
**dadurch gekennzeichnet, dass** die festen Pigmentpräparationen einen Wassergehalt von weniger als 10, vorzugsweise weniger als 3 Gew.% und eine mittlere Partikelgröße von 20 bis 2000, vorzugsweise 50 bis 1000 und insbesondere 80 bis 500 µm besitzen.

2. Verwendung gemäß Anspruch 1 **dadurch gekennzeichnet, dass** das Pigment der Komp.a) ausgewählt wird aus der Gruppe der
i) anorganischen Oxidpigmente, insbesondere Titandioxid- oder Eisenoxidpigmente,
ii) organischen Pigmente, vorzugsweise polycyclische Pigmente aus der Gruppe der Phthalocyaninpigmente oder Anthrachinonpigmente, oder verlackte Azopigmente
iii) oder Mischungen der genannten.

3. Verwendung gemäß Anspruch 1 **dadurch gekennzeichnet, dass** das Pigment der Komp. a) ausgewählt wird aus der Gruppe der gegebenenfalls halogenierten Cu-Phthalocyaninpigmente oder verlackten Metallsalzen von Sulfon- und/oder carbonsäuregruppenhaltigen Monoazopigmenten, vorzugsweise Color Index C.I. Pigment Red 48:2, 52:1 und 57:1.

4. Verwendung gemäß Anspruch 1 **dadurch gekennzeichnet, dass** als zusätzliche Komponente
c) gegebenenfalls hydrophobierte hochdisperse, amorphe pyrogene Kieselsäuren, gegebenenfalls hydrophobiertes feinstteiliges Kaolin und/oder hochdisperses Aluminiumoxid
enthalten ist.
a) wenigstens ein organisches oder anorganisches Pigment,
b) wenigstens eine Verbindung aus der Gruppe der Polyetherpolyole, der Umsetzungsprodukte von Alkylenoxiden mit alkylierbaren Verbindungen, oder der oxalkylierten Phenole, insbesondere Phenol/Styrol-Polyglykolether,
**dadurch gekennzeichnet, dass** die festen Pigmentpräparationen einen Wassergehalt von weniger als 10, vorzugsweise weniger als 3 Gew.-% und eine mittlere Partikelgröße von 20 bis 2000, vorzugsweise 50 bis 1000 und insbesondere 80 bis 500 µm besitzen.

## Claims

1. Use of solid pigment preparations as colorants for colouring seed or seeddressing materials, comprising
a) at least one organic or inorganic pigment,
b) at least one compound from the group of the polyether polyols, the reaction products of alkylene oxides with alkylatable compounds, or of the oxalkylated phenols, in particular phenol/styrene polyglycol ethers,
**characterized in that** the solid pigment preparations have a water content of less than 10, preferably less than 3% by weight and a mean particle size of 20 to 2000, preferably 50 to 1000 and in particular 80 to 500 µm.

2. Use according to Claim 1, **characterized in that** the pigment of component a) is selected from the group of the
i) inorganic oxide pigments, in particular titanium dioxide or iron oxide pigments,
ii) organic pigments, preferably polycyclic pigments from the group of the phthalocyanine pigments or anthraquinone pigments, or laked azo pigments,
iii) or mixtures of these.

3. Use according to Claim 1, **characterized in that** the pigment of component a) is selected from the group of the optionally halogenated Cu-phthalocyanine pigments or laked metal salts of sulpho- and/or carboxyl-containing monoazo pigments, preferably Color Index C.I. Pigment Red 48:2, 52:1 and 57:1.

4. Use according to Claim 1, **characterized in that** they comprise, as additional component,
c) optionally hydrophobicized highly-dispersed amorphous pyrogenic silicas, optionally hydrophobicized ultrafinely divided kaolin and/or highly dispersed alumina,
a) at least one organic or inorganic pigment,
b) at least one compound from the group of the polyether polyols, the reaction products of alkylene oxides with alkylatable compounds, or of the oxalkylated phenols, in particular phenol/styrene polyglycol ethers,
**characterized in that** the solid pigment preparations have a water content of less than 10, preferably less than 3% by weight and a mean particle size of 20 to 2000, preferably 50 to 1000 and in particular 80 to 500 µm.

## Revendications

1. Utilisation de préparations solides de pigments comme agent colorant pour la coloration de semences ou de désinfections de semences, contenant
a) au moins un pigment organique ou inorganique,
b) au moins un composé parmi les polyétherpolyols, les produits de réaction d'oxydes d'alkylène avec des composés pouvant être alkylés ou les phénols oxalkylés, en particulier le phénol/styrène-polyglycoléther,
**caractérisée en ce que** les préparations solides de pigments possèdent une teneur en eau inférieure à 10, de préférence inférieure à 3 % en poids et une taille moyenne de particules comprise entre 20 et 2 000, de préférence entre 50 et 1 000 et en particulier entre 80 et 500 µm.

2. Utilisation selon la revendication 1, **caractérisée en ce que** le pigment du composé a) est choisi parmi
i) des pigments d'oxydes inorganiques, en particulier des pigments de dioxyde de titane ou d'oxyde de fer,
ii) des pigments organiques, de préférence des pigments polycycliques choisis parmi les pigments de phtalocyanine ou les pigments d'anthraquinone ou des pigments azo laqués
iii) ou des mélanges de ceux cités.

3. Utilisation selon la revendication 1, **caractérisée en ce que** le pigment du composé a) est choisi parmi les pigments de Cu-phtalocyanine éventuellement halogénés ou des sels métalliques laqués de pigments monoazo contenant des groupes acide sulfonique et/ou carboxylique, de préférence le rouge de pigment d'indice de couleur C.I. 48:2, 52:1 et 57:1.

4. Utilisation selon la revendication 1, **caractérisée en ce qu'**est contenu comme constituant supplémentaire
c) des acides siliciques pyrogènes, amorphes, hautement dispersés, éventuellement rendus hydrophobes, du kaolin en fines particules éventuellement rendu hydrophobe et/ou de l'oxyde d'aluminium hautement dispersé,
b) au moins un composé du groupe des polyétherpolyols, des produits de réaction d'oxydes d'alkylène avec des composés pouvant être alkylés ou les phénols oxalkylés, en particulier le phénol/styrène-polyglycoléther,
**caractérisée en ce que** les préparations solides de pigments possèdent une teneur en eau inférieure à 10, de préférence inférieure à 3 % en poids et une taille moyenne de particule de 20 à 2 000, de préférence de 50 à 1 000 et en particulier de 80 à 500 µm.
